Europäisches Patentamt

European Patent Office

Office européen des brevets

(11) Numéro de publication: **0 092 488**
**A1**

## (12) DEMANDE DE BREVET EUROPEEN

(21) Numéro de dépôt: **83400774.2**

(22) Date de dépôt: **19.04.83**

(51) Int. Cl.³: **A 47 J 43/28,** A 47 G 21/04

(30) Priorité: **19.04.82 FR 8206641**

(43) Date de publication de la demande: **26.10.83**
**Bulletin 83/43**

(84) Etats contractants désignés: **BE CH DE GB IT LI NL**

(71) Demandeur: **Bergman, Marie-José, 87, avenue de Villiers, F-75017 Paris (FR)**

(72) Inventeur: **Bergman, Marie-José, 87, avenue de Villiers, F-75017 Paris (FR)**

(74) Mandataire: **CABINET BONNET-THIRION, 95 Boulevard Beaumarchais, F-75003 Paris (FR)**

(54) Instrument pour la manupulation des éléments contenus dans des récipients de cuisson à bords relativement élevés.

㊼ Instrument permettant la manipulation aisée, au moindre risque de brûlure, des éléments contenus dans des récipients de cuisson à bords relativement élevés.

Il est constitué d'un cuilleron dont la forme comporte:

— en plan: un bord antérieur rectiligne ou à très faible courbure suivi, de part et d'autre, par deux arcs à forte courbure, légèrement supérieurs à 90°,

— en coupe: le cuilleron présente une partie antérieure plane.

Son manche comporte deux sections faisant respectivement des angles de l'ordre de 56° et 86°.

"Instrument pour la manipulation des éléments contenus dans des récipients de cuisson à bords relativement élevés"

La présente invention concerne un ustensile du type cuillère à pot pour la manipulation des éléments contenus dans des récipients de cuisson à bords élevés.

La plupart de ceux-ci, dans le domaine des ustensiles de cuisine, et, notamment les marmites cuisant sous pression, ont la forme d'un cylindre à fond plat. Le raccordement du fond à la paroi décrit une couronne dont la section est un quart de cercle.

La manipulation des éléments contenus dans de tels récipients demande donc :

a) la possibilité de racler le fond qui est plan ;

b) la possibilité de "cueillir" les éléments détachés du fond et de les ramener jusqu'à la paroi cylindrique ;

c) la possibilité de les remonter le long de cette paroi qui est courbe ;

les trois opérations a,b,c, devant pouvoir être enchaînées ;

d) la possibilité, enfin de racler la zone de raccordement du fond à la paroi, couronne de section en quart de cercle de forte courbure.

Les ustensiles ordinairement utilisés, louches, cuillères à long manche, cuillères à manches latéraux, cuillère à pot, ne permettent pas la réalisation successive de ces quatre opérations. Il en résulte que la ménagère est conduite à des gestes malcommodes comportant des risques de brûlure et par conséquent d'accident du fait des réactions incontrôlées que la brûlure provoque.

L'invention consiste à associer un manche ayant subi une double flexion déterminée à un cuilleron dont la concavité est précédée, vers l'avant d'une surface plane et dont la largeur est sensiblement plus grande que la longueur. Ceci donne un ustensile permettant de réaliser aisément et avec le moindre risque de brûlure, les quatre opérations décrites ci-dessus.

L'invention sera décrite plus en détail ci-après en référence au dessin annexé où

la figure 1 est une vue de côté d'un instrument selon l'invention ;

la figure 2 montre à plus petite échelle, un tel instrument vu de côté, en diverses positions dans une marmite de cuisson ;

la figure 3 est une vue semblable à la précédente mais montrant l'instrument en diverses positions vu de face ;

la figure 4 est une vue semblable aux deux précédentes mais en plan ;

la figure 5 est une vue de détail en plan du cuilleron ;

la figure 6 en est une élévation latérale en coupe selon le plan A A' de la figure 5 ;

la figure 7 en est une élévation frontale avec coupe par-tielle selon le plan B B' de la figure 5.

En référence aux dessins, le cuilleron est caractérisé en ce que :

1° - Vu en plan, selon le plan défini par les trois points A, B, B' (figure 5) sa découpe extérieure comprend, symétriquement par rapport à la ligne A A', (ligne de coupe avec le plan perpendiculaire passant par l'axe du manche) :

a) une portion rectiligne Am suivie d'une portion à faible courbure, mn dont l'ensemble constitue un bord antérieur permettant le raclage du fond plan et la remontée le long de la paroi cylindrique dont la courbure est relativement faible ;

b) une portion à forte courbure formant un arc légèrement supérieur à 90°, np, suivie d'une portion à faible courbure, pq, qui ferme pratiquement la forme, une très faible portion rectiligne qA' est destinée à recevoir le manche. Le rapport de la largeur BB' à la longueur AA' est préférentiellement de l'ordre de 10/7.

Cette disposition permet au cuilleron de suivre, par la droite comme par la gauche, la zone de raccordement du fond à la paroi en autorisant un certain jeu de l'axe AA' par rapport à la verticale.

2° - Vu en coupe selon le plan passant par l'axe du manche (figure 6) le cuilleron comporte :

a) une portion rectiligne Ao, assurant une large surface plane de ramassage (définie, figure 5, par la ligne passant par les points : A, n, o, n', A) en contact avec le fond ;

b) une section courbe o, H', A' qui forme poche quand A, A' est horizontale.

Les dispositions 2a et 2b permettent les mouvements de ramassage et de "cueillette" des éléments.

3° - Vu en coupe selon le plan passant par BB' (figure 7) sa forme est très évasée, la section constituant le fond étant un arc relativement petit relié au bord supérieur par une position rectiligne faisant avec la ligne BB' un angle très aigu.

Le manche est caractérisé en ce que :

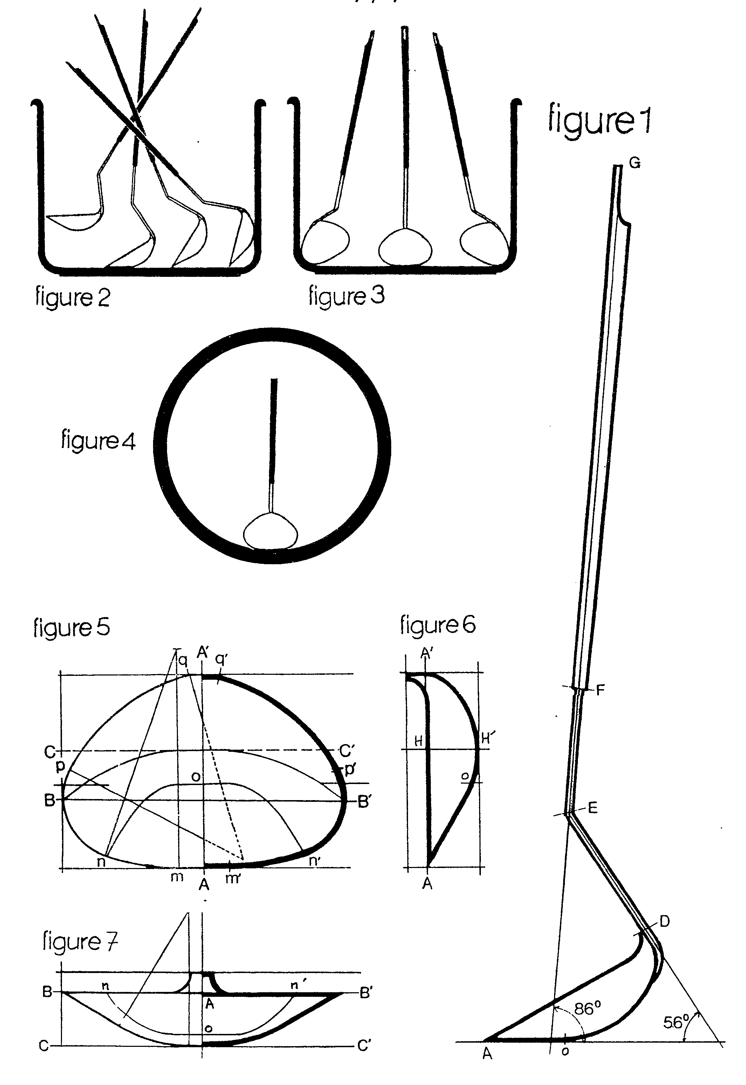

a) la liaison avec le cuilleron est réalisée de telle façon que la portion E,D (figure 1) fait un angle de 50 à 60° avec le plan contenant Ao ;

b) au point E, tel que la longueur D,E est de l'ordre de la moitié de la largeur B,B' de la cuillère, le manche subit une flexion telle que la portion G,E fait un angle légèrement inférieur à 90° avec le même plan.

Cette double inclinaison du manche par rapport à la portion plane du cuilleron a pour effet de renvoyer la partie supérieure du manche vers le centre du cercle formé par les bords du récipient.

L'ensemble des dispositions données au cuilleron et au manche permet donc bien de réaliser les quatre opérations nécessaires, de façon commode et en tenant la main éloignée de la paroi chaude grâce à la double flexion du manche. Les différentes positions prises par le cuilleron et le manche pendant les opérations sont représentées aux figures 2,3,4.

Le domaine d'application de l'invention est évident, il concerne, en priorité les usages domestiques pour lesquels il assure à la ménagère un travail efficace et une plus grande sécurité.

Sa fabrication, comme ses matériaux, sont de technique courante.

Selon une réalisation, le cuilleron et le manche sont en tôle d'acier emboutie, assemblés par soudure électrique, les spécifications exprimées en mm pour les longueurs , étant les suivantes :

- cuilleron : A,A' = 70   B,B' = 100   H,H' = 19   A,o = 34

0092488

4

- manche     : D,E = 50   E,G = 232   F,G = 187 étant recouvert
               d'un revêtement protecteur anti-calorique, bois
               ou plastique.
- angles     : D,E/Ao = 56°   GE/Ao = 86°

Selon une variante de l'instrument, une série de trous ou de fentes répartis sur la totalité ou sur une partie de la surface du cuilleron permettent au liquide de s'écouler.

## REVENDICATIONS

1- Instrument du type cuillère à pot caractérisé en ce que :

a) il comporte un cuilleron de forme ellipsoïdale telle que son grand axe BB' soit dans un rapport de l'ordre de 10/7 avec le petit axe AA', ces axes se coupant en un point situé sur AA' à une distance de A légèrement supérieure à AA'/3 ;

b) il comporte un manche dont la longueur est telle que sa partie supérieure FG dépasse nettement le bord des récipients de cuisson à parois élevées tels que les auto-cuiseurs modernes;

c) que l'axe passant par cette partie du manche

- passe par le point de rencontre des axes AA' et BB'

- soit perpendiculaire à l'axe BB'

- fasse un angle légèrement inférieur à 90° avec le plan du fond du récipient quand le point de contact entre le cuilleron et le fond du récipient est le point de rencontre des axes AA' et BB'.

2- Instrument selon 1, caractérisé en ce que l'angle précité est de 86° environ.

3- Instrument selon 1 ou 2, caractérisé en ce que la partie inférieure du manche ED joignant la partie supérieure EG à la partie postérieure du cuilleron ait une longueur de l'ordre de BB'/2, l'axe passant par ED faisant un angle légèrement inférieur à 60° avec le plan du fond du récipient quand le point de contact entre le cuilleron et le fond du récipient est le point de rencontre des axes AA' et BB'.

4- Instrument selon 3, caractérisé en ce que ledit angle d'inclinaison de la partie inférieure du manche est de 56° environ.

5- Instrument selon une quelconque des revendications 1 à 4, caractérisé en ce qu'il comporte un cuilleron :

a) dont le périmètre extérieur comprend deux parties symétriques par rapport à l'axe AA'. Chacune comportant :

- à l'avant : une portion rectiligne 'A,m) suivie d'une portion à faible courbure (m,n) constituant le bord 'attaque,

- latéralement : une portion à forte courbure inscrite dans un angle légèrement supérieur à 90° (n,p), suivi d'une portion à faible courbure (p,q) fermant pratiquement la forme;

b) dont la forme vue en coupe selon le plan passant par

6

par l'axe du manche présente :

- à l'avant : une portion rectiligne (A,o)

- à l'arrière : raccordant à la précédente, une porti courbe (o,H',A') qui rejoint la ligne horizontale AA';

c) dont le fond comporte une partie plane (A,m,n,o,n' m' A) en forme de trapèze curviligne dont la plus grande largeur nn' est dans un rapport de l'ordre de O,7 avec le grand axe BB' et dont la plus grande profondeur Ao est dans un rapport de l'ordre de O,4 avec le petit axe AA'.

6) Instrument selon une quelconque des revendications précédentes, caractérisé en ce que le cuilleron comporte su tout ou partie de sa surface une série de fentes ou de trous permettant au liquide de s'écouler.

0092488

figure 1

figure 2

figure 3

figure 4

figure 5

figure 6

figure 7

G

F

E

D

86°

56°

A

o

A'

q

A'

q'

C

C'

p

p'

B

o

B'

n

n'

m

A

m'

A'

H

H'

o

A

B

n

n'

A

o

C

C'

**Office européen des brevets**

## RAPPORT DE RECHERCHE EUROPEENNE

EP 83 40 0774

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-2 574 679 (WOODBURN) | | A 47 J 43/28 <br> A 47 G 21/04 |
| A | US-A-2 795 119 (BAIR) | | |
| A | US-A-2 258 058 (JOHNSON) | | |
| A | DE-C- 400 616 (KRATKY) | | |
| A | GB-A- 274 951 (DANCY) | | |
| | ----- | | **DOMAINES TECHNIQUES RECHERCHES (Int. Cl. 3)** <br><br> A 47 G <br> A 47 J |

Le présent rapport de recherche a été établi pour toutes les revendications

| Lieu de la recherche . <br> LA HAYE | Date d'achèvement de la recherche <br> 20-07-1983 | Examinateur <br> D HULSTER E.W.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82